# EUROPEAN PATENT APPLICATION

(11) **EP 4 648 202 A1**
(43) Date of publication of application: **12.11.2025**
(21) Application number: 24788884.5
(22) Date of filing: 13.02.2024
(51) Int. Cl.: H01M 50/342, H01M 50/184, H01M 50/186, H01M 50/383, H01M 50/105

(54) **POUCH-TYPE BATTERY CELL**

(30) Priority: 12.04.2023 KR 20230048247; 24.05.2023 KR 20230067111
(71) Applicant: LG Energy Solution, Ltd., Seoul 07335 (KR)
(72) Inventor: LEE, Chang Je, Daejeon 34122 (KR); LEE, In Seok, Daejeon 34122 (KR); MYOUNG, Gi Hoon, Daejeon 34122 (KR)
(74) Representative: Goddar, Heinz J.
(86) International application number: PCT/KR2024/002017
(87) International publication number: WO 2024/214940

(57) **Abstract**

Provided is a pouch type battery cell, in which an electrode assembly may be accommodated between a first case and a second case. The pouch type battery cell may include: a cup part provided in at least one of the first case or the second case and configured to accommodate the electrode assembly; a folding part in which an edge portion of the first case surrounds an edge portion of the second case so that a discharge passage is provided between the edge portion of the first case and the edge portion of the second case; a sealing part provided on the folding part; a venting part, wherein when an internal pressure within the cup part increases, the cup part and the discharge passage are in communication with each other through the venting part.

## Description

### TECHNICAL FIELD

### CROSS-REFERENCE TO RELATED APPLICATIONS

This application claims the priority of Korean Patent Application No. 10-2023-0048247 filed on April 12, 2023, and Korean Patent Application No. 10-2023-0067111 filed on May 24, 2023, in the Korean Intellectual Property Office, the disclosures of which are each incorporated herein by reference.

### TECHNICAL FIELD

The present invention relates to a pouch type battery cell.

### BACKGROUND ART

In recent, secondary batteries have attracted considerable attention as power sources for electric vehicles (EVs), hybrid electric vehicles (HEVs), and the like, which have been developed to solve limitations, such as air pollution, caused by existing gasoline and diesel vehicles that use fossil fuels.

While one, two, three, or four secondary batteries are ordinarily used in small mobile devices, battery modules in which a plurality of secondary batteries are electrically connected to each other, or battery packs in which a plurality of battery modules are electrically connected to each other, are used in medium and large devices such as electric vehicles due to the vehicles need for high power and large capacity.

Among currently commercialized secondary batteries, lithium secondary batteries are among the most spotlighted. Lithium secondary batteries are classified into can type, prismatic type, and pouch type according to their shapes of exterior materials. Among them, pouch type secondary batteries are being widely used in medium and large-sized battery modules because of their high energy density and their ability to be easily stacked.

Meanwhile, as the demand for high energy secondary battery modules mounted in vehicles increase, customers' demand for battery safety also shows an increasing trend. That is, when secondary batteries have high energy density there may be a stability risk (*e.g.,* a risk that the battery ignites or explodes).

In general, a pouch type battery cell has a structure in which an electrode assembly is accommodated in a pouch type battery case, and a sealing part is formed on an edge of the battery case.

When the battery cell exceeds a critical temperature due to abnormal heat generation and the like, a temperature and an internal pressure may rapidly rise, thereby causing an explosion. As a result, thermal propagation (TP) may occur to other battery cells in the vicinity thereof. Therefore, in order to prevent the thermal propagation or sufficiently delay the thermal propagation, it is necessary to discharge a gas generated due to the abnormal heat generation and the like in the battery cell in advance in a specific direction.

### DISCLOSURE OF THE INVENTION

### TECHNICAL PROBLEM

An aspect of the present invention provides a pouch type battery cell configured to discharge a gas in a preset direction when an internal pressure of a cup part, in which an electrode assembly is accommodated, increases.

### TECHNICAL SOLUTION

According to an aspect of the present invention, there is provided a pouch type battery cell, in which an electrode assembly may be accommodated between a first case and a second case. The pouch type battery cell may include: a cup part provided in at least one of the first case or the second case and configured to accommodate the electrode assembly; a folding part in which an edge portion of the first case surrounds an edge portion of the second case so that a discharge passage is provided between the edge portion of the first case and the edge portion of the second case; a sealing part provided on the folding part; and a venting part in which a portion of the folding part is sealed weaker than the sealing part or is not sealed so that, when an internal pressure of the cup part increases, the cup part and the discharge passage communicate with each other.

The sealing part and the venting part may be disposed between the cup part and the discharge passage.

The folding part may include: a first facing portion configured to face one surface of the edge portion of the second case; a second facing portion configured to face the other surface of the edge portion of the second case; and a connection portion configured to connect the first facing portion to the second facing portion and bent or curved to be spaced a predetermined distance from an end of the edge portion of the second case. The discharge passage may be disposed in the connection portion.

A thickness of the connection portion in a direction parallel to a thickness of the edge portion of the second case may be greater than a sum of a thickness of the first facing portion, the thickness of the edge portion of the second case, and a thickness of the second facing portion.

A width of the discharge passage in a direction parallel to a thickness of the edge portion of the second case may be greater than that of the edge portion of the second case.

The connection portion may include a curved surface that is convex outward.

The sealing part may be provided by sealing the first facing portion and the second facing portion with the edge portion of the second case.

The venting part may be provided by weakly sealing or unsealing the first facing portion and the edge portion of the second case with each other.

The discharge passage may extend in a full-length or full-width direction of the cup part and has at least one opened end.

The venting part may be provided in plurality along circumferences of the first case and the second case.

Each of the folding part and the venting part may be provided in plurality, wherein the plurality of folding parts may include: a first folding part extending in a full-length direction of the cup part; and a second folding part extending in a full-width direction of the cup part. The plurality of venting parts may include: a first venting part disposed outside a long side of the cup part and configured so that the cup part and a discharge passage within the first folding part communicate with each other when an internal pressure of the cup part increases; and a second venting part disposed outside a short side of the cup part and configured so that the cup art and a discharge passage within the second folding part communicate with each other when the internal pressure of the cup part increases.

According to another aspect of the present invention, there is provided a pouch type battery cell, in which an electrode assembly may be accommodated between a first case and a second case. The pouch type battery cell may include: a cup part provided in at least one of the first case or the second case and configured to accommodate the electrode assembly; a folding part in which an edge portion of the first case surrounds an edge portion of the second case so that a discharge passage is provided between the edge portion of the first case and the edge portion of the second case; a sealing part provided on the folding part; and a gas discharge member disposed between the cup part and the discharge passage and made of a material through which a gas is capable of passing.

The gas discharge member may include a hygroscopic material.

An inner end of the gas discharge member may be exposed to the inside of the cup part.

An outer end of the gas discharge member may be exposed to the inside of the discharge passage.

An outer end of the gas discharge member more may protrude than an end of the edge portion of the second case.

The folding part may include: a first facing portion configured to face one surface of the edge portion of the second case; a second facing portion configured to face the other surface of the edge portion of the second case; and a connection portion configured to connect the first facing portion to the second facing portion and bent or curved to be spaced a predetermined distance from an end of the edge portion of the second case. The discharge passage may be disposed in the connection portion.

The gas discharge member may be disposed between the first facing portion and the edge portion of the second case.

The gas discharge member may be provided in plurality along circumferences of the first case and the second case.

### ADVANTAGEOUS EFFECTS

Accordingly, when the internal pressure of the cup part, in which the electrode assembly is accommodated, increases, the gas in the cup part may sequentially pass through the venting part and the discharge passage within the folding part and then be discharged. Therefore, the gas may be discharged in a preset direction to prevent the pouch type battery cell from exploding and also to prevent thermal propagation (TP) to other battery cells in the vicinity thereof due to the explosion.

In addition, the discharge passage may be simply and easily implemented with only the folding part without a separate device or the additional sealing process.

In addition, there may be the advantage of adjusting the length, the number, and the position of the venting part to easily and appropriately design the flow rate at which the gas is discharged.

Moreover, when the internal pressure of the cup part, in which the electrode assembly is accommodated, increases, the gas in the cup part may sequentially pass through the gas discharge member and the discharge passage within the folding part and then be discharged. The gas may be discharged without a physical opening, and thus, the internal pressure of the cup part may be maintained at the appropriate level, and the pouch type battery cell may be continuously used.

In addition, the effects that are obvious to those skilled in the art may be predicted from the configurations according to the embodiment of the present invention.

### BRIEF DESCRIPTION OF THE DRAWINGS

The following drawings attached in this specification illustrate embodiments of the present invention and function to make further understood the technical spirit of the present invention along with the detailed description, and thus, the present invention should not be construed as being limited to only the drawings.
FIG. 1 is a perspective view illustrating a case and an electrode assembly of a pouch type battery cell according to a first embodiment of the present invention.
FIG. 2 is a plan view of the pouch type battery cell according to the first embodiment of the present invention;
FIG. 3 is a partial cross-sectional view taken along line A-A' of FIG. 2.
FIG. 4 is a partial cross-sectional view taken along line B-B' of FIG. 2.
FIG. 5 is a view illustrating a modified example of a connection portion illustrated in FIGS. 3 and 4.
FIG. 6 is a plan view illustrating a pouch type battery cell according to a second embodiment of the present invention.
FIG. 7 is a partial cross-sectional view taken along line C-C' of FIG. 6.
FIG. 8 is a plan view of a pouch type battery cell according to a third embodiment of the present invention.
FIG. 9 is a plan view of a pouch type battery cell according to a fourth embodiment of the present invention.
FIG. 10 is a partial cross-sectional view taken along line D-D' of FIG. 9.

### MODE FOR CARRYING OUT THE INVENTION

Hereinafter, embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, details generally unrelated to the present invention, or related known technologies that may unnecessarily obscure the gist of the present invention have been omitted. Reference symbols are added to components in each drawing. In this case, the same or similar reference numerals are assigned to the same or similar elements throughout the specification.

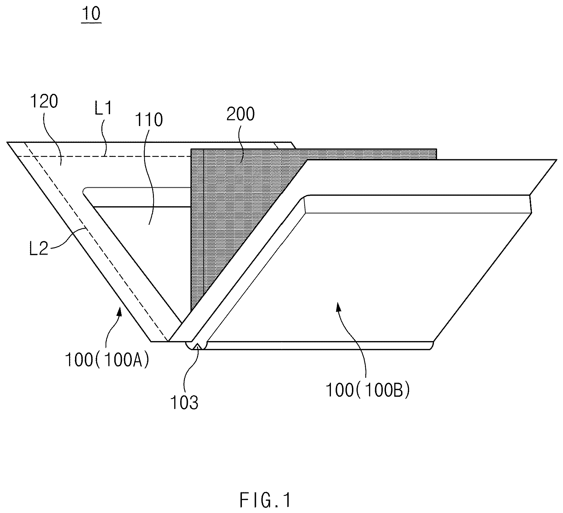

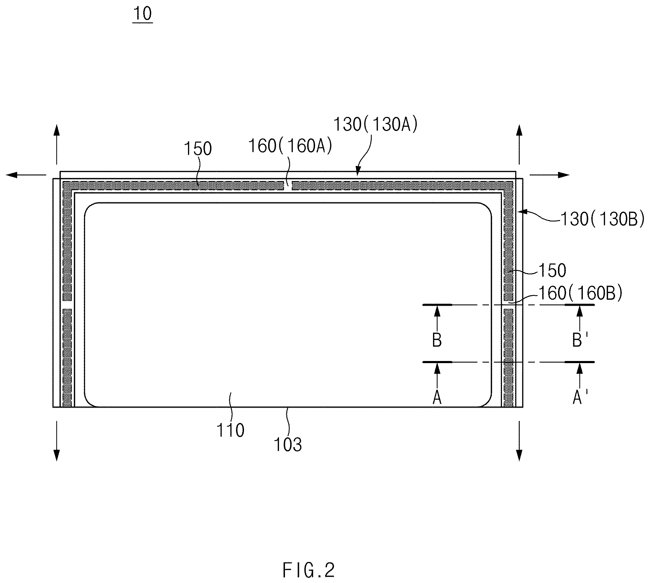

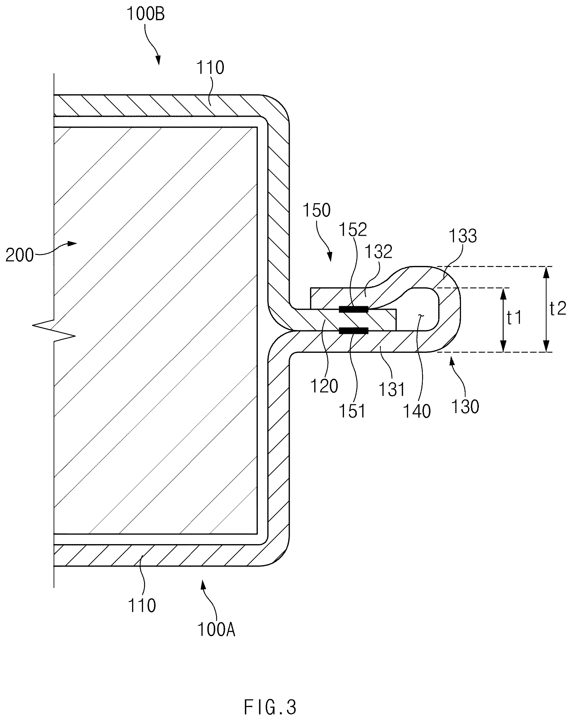

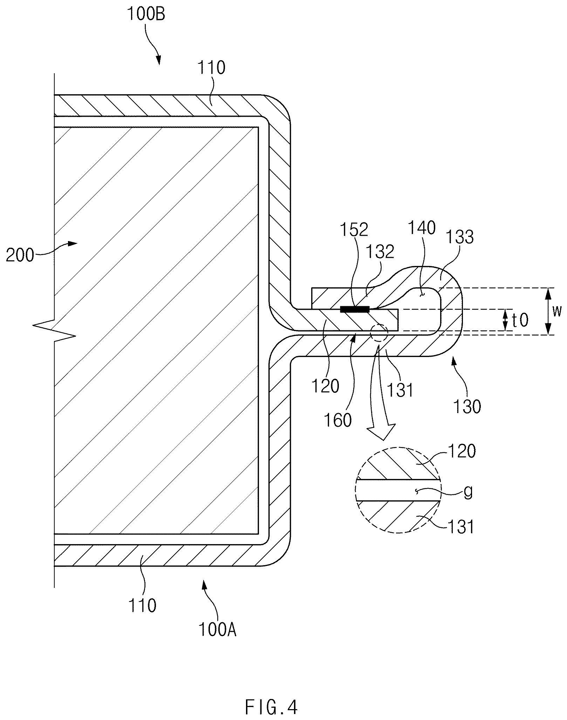

FIG. 1 is a perspective view illustrating a case and an electrode assembly of a pouch type battery cell according to a first embodiment of the present invention, FIG. 2 is a plan view of the pouch type battery cell according to the first embodiment of the present invention, FIG. 3 is a partial cross-sectional view taken along line A-A' of FIG. 2, and FIG. 4 is a partial cross-sectional view taken along line B-B' of FIG. 2.

A pouch type battery cell 10, according to a first embodiment, may include a pair of cases 100 and an electrode assembly 200. In more detail, the pouch type battery cell 10 may be manufactured by accommodating the electrode assembly 200 between a first case 100A and a second case 100B.

The first case 100A and the second case 100B may be sealed together with electrode assembly 200 and an electrolyte therein to constitute pouch type battery cell 10.

The electrode assembly 200 may include a positive electrode, a negative electrode, and a separator disposed between the positive electrode and the negative electrode to insulate the positive and negative electrodes from each other. The type of electrode assembly 200 is not limited. For example, the electrode assembly 200 may be a stack type electrode assembly in which positive and negative electrodes are alternately stacked with a separator therebetween. As another example, the electrode assembly 200 may be a jelly roll-type electrode assembly in which sheet-shaped positive and negative electrodes are wound together with a separator therebetween.

The combination of the first case 100A and the second case 100B provide the accommodation space for accommodating the electrode assembly 200 and may have a pouch shape as a whole.

One side of the first case 100A and one side of the second case 100B may be connected to each other, and the connected portion may constitute a folding region 103. That is, the pair of cases 100 may be integrally formed along the folding region 103. However, in other examples, the first case 100A and the second case 100B may be provided as separate components that are subsequently sealed together.

Each of the cases 100 may include a first resin layer defining an innermost layer, a second resin layer defining an outermost layer, and a metal layer interposed between the first resin layer and the second resin layer. That is, each of the cases 100 may be manufactured by molding a laminate film including a first resin layer, a second resin layer, and a metal layer.

The first resin layer constituting the innermost layer may be in direct contact with, or be adjacent to, the electrode assembly 200 and the electrolyte. Thus, the first resin layer may be formed of a material having high insulating properties and high corrosion resistance. For example, the first resin layer may include a polypropylene (PP) material. However, the first resin layer is not limited thereto, and those skilled in the art may appropriately select the material of the first resin layer.

The second resin layer constituting the outermost layer may electrically insulate the electrode assembly 200 from the outside while protecting the pouch type battery cell 10 from friction and collision with external items. For example, the second resin layer may include a polyethylene terephthalate (PET) material. However, the second resin layer is not limited thereto, and those skilled in the art can appropriately select the material of the second resin layer.

Furthermore, at least one of the first resin layer or the second resin layer may be provided as constructs including two or more layers to improve moldability and adhesion.

The metal layer may secure mechanical strength of the case 100, block an access of external gas or moisture, and prevent leakage of the electrolyte. The metal layer may include aluminum (Al) or stainless steel (STS) material. However, the metal layer is not limited thereto, and those skilled in the art can appropriately select the material of the metal layer.

The pouch type battery cell 10 may include a cup part 110 provided in at least one of the first case 100A or the second case 100B to accommodate the electrode assembly 200.

The cup part 110 may be recessed to a predetermined depth by drawing on the laminate film, which defines the base material of the case 100.

As illustrated in FIG. 1, the cup part 110 may be provided in each of the first case 100A and the second case 100B. In this example, the electrode assembly 200 may be accommodated in the accommodation space defined by the pair of cup parts 110 . However, the present invention is not limited thereto, and the cup part 110 may alternatively be provided only in one of the first case 100A or the second case 100B. Put differently, the case not including the cup part 110 may be flat.

Each of the first case 100A and the second case 100B may include an edge portion 120 disposed around the cup part 110. The edge portion 120 may also be referred to as a terrace portion. The edge portions 120 of the first case 100A and the second case 100B may be placed in contact with each other and sealed together, thereby sealing the electrode assembly 200 inside the first case 100A and the second case 100B.

When the first case 100A and the second case 100B are integrally provided with folding region 103, the folding region 103 may be folded so that the edge portions 120 of the first case 100A and the second case 100B are in contact with each other. In this case, the edge portions 120 that are in contact with each other define three sides of the pouch type battery cell 10, and the folding region 103 may define the one remaining side. Thus, a sealing part 150, to be described later, may be disposed on the three sides of the pouch type battery cell 10.

The pouch type battery cell 10 may include a folding part 130, in which the edge portion 120 of the first case 100A surrounds the edge portion 120 of the second case 100B so that a discharge passage 140 is provided between the edge portion 120 of the first case 100A and the edge portion 120 of the second case 100B.

The edge portion 120 of the first case 100A may be folded, curved, or bent to constitute the folding part 130. In more detail, in order to form the folding part 130, the edge portion 120 of the first case 100A may be folded to be spaced a predetermined distance from an end of the edge portion 120 of the second case 100B.

The folding part 130 may extend in a full-length or full-width direction of the cup part 110.

At least one folding part 130, preferably, a plurality of folding parts may be provided. For example, as illustrated in FIG. 2, the folding part 130 may be disposed on three sides excluding the folding region 103 among the four sides of the pouch type battery cell 10. In this case, the plurality of folding parts 130 include a first folding part 130A extending in the full-length direction of the cup part 110 and a second folding part 130B extending in the full-width direction of the cup part 110.

However, the present invention is not limited thereto, and it is also possible that the folding part 130 is disposed on only one or more of the three sides.

To form the folding part 130, the edge portion 120 of the first case 100A may be wider than the edge portion 120 of the second case 100B. In more detail, the edge portion 120 of the first case 100A may be longer than the edge portion 120 of the second case 100B in the full-length and/or full-width direction.

With reference to FIG. 1, a first line L1 and a second line L2 are displayed on the edge portion 120 of the first case 100A to depict an exemplary line corresponding to an end of the edge portion 120 of the second case 100B. The first line L1 may be parallel to the full-length direction of the pouch type battery cell 10, and the second line L2 may be parallel to the full-width direction of the pouch type battery cell 10.

A corner at which the first line L1 and the second line L2 overlap each other may be doubly folded at the edge portion of the first case 100A. Alternatively, the corner may be cut into an appropriate shape by those skilled in the art.

In more detail, referring to FIG. 3 or 4, the folding part 130 may include a first facing portion 131 facing one surface of the edge portion 120 of the second case 100B, a second facing portion 132 facing the other surface of the edge portion 120 of the second case 100B, and a connection portion 133 connecting the first facing portion 131 to the second facing portion 132.

The first facing portion 131 may be in contact with one surface of the edge portion 120 of the second case 100B. The second facing portion 132 may be in contact with the other surface of the edge portion 120 of the second case 100B.

The connection portion 133 may be folded, bent, or curved to be spaced a predetermined distance from the end of the edge portion 120 of the second case 100B. Due to the above configuration, the discharge passage 140 may be provided in the connection portion 133. When an internal pressure of the cup part 110 increases, a gas generated in the cup part may be discharged to the outside of the pouch type battery cell 10 by sequentially passing through a venting part 160 to be described later and the discharge passage 140.

A cross-sectional shape of the discharge passage 140 may be defined by a shape of the connection portion 133. For example, the connection portion 133 may include a curved surface that is convex outward. In this case, a portion of the cross-section of the discharge passage 140 may be substantially rounded.

The first facing portion 131 and the second facing portion 132 may overlap each other in a thickness direction of the edge portion 120 of the second case 100B. The first facing portion 131 and the second facing portion 132 may be bonded to the edge portion 120 of the second case 100B by the sealing part 150 to be described later.

A thickness t2 of the connection portion 133 in a direction parallel to a thickness of the edge portion 120 of the second case 100B (a vertical direction with reference to FIG. 3) may be greater than the sum t1 of a thickness of the first facing portion 131, a thickness of the edge portion 120 of the second case 100B and a thickness of the second facing portion 132. That is, the thickness t2 of the connection portion 133 may be greater than the thickness of the sealing part 150. Put another way, the connection portion 133 may be provided to protrude further in a thickness direction than the combination of the first facing portion 131 and the second facing portion 132.

A width W of the discharge passage 140 in a direction parallel to the thickness of the edge portion 120 of the second case 100B (a vertical direction with reference to FIG. 4) may be greater than a thickness t0 of the edge portion 120 of the second case 100B.

Due to the above-described configuration, a cross-sectional area of the discharge passage may be sufficiently large, and a gas may be smoothly discharged through the discharge passage 140.

The discharge passage 140 may extend in the full-length or full-width direction of the cup part 110, and at least one end, preferably both ends of the discharge passage 140 may be open. The open end of the discharge passage 140 may serve as an outlet through which a gas is discharged. An arrow, as indicated in FIG. 2, schematically indicates a gas that is discharged from the end of the discharge passage 140 in each folding part 130. Thus, there is no need to provide a separate outlet in the folding part 130.

As shown in FIG. 2, the sealing part 150 may be disposed on the folding part 130 and elongated along the folding part 130.

The sealing part 150 may be formed in a multitude of ways. For example, the sealing part 150 may be formed by thermal fusion, laser welding, ultrasonic welding, or resistance welding.

More specifically, the sealing part 150 may be disposed between the cup part 110 and the discharge passage 140. Thus, the sealing part 150 may partition an inner space of the cup part 110 and the discharge passage 140.

Referring to FIG. 3, the sealing part 150 may be provided by sealing the first facing portion 131 and the second facing portion 132 with the edge portion 120 of the second case 100B. In more detail, the sealing part 150 may include a first sealing part 151, on which the edge portion 120 of the second case 100B and the first facing portion 131 are sealed, and a second sealing part 152 on which the edge portion 120 of the second case 100B and the second facing portion 132 are sealed. That is, the sealing part 150 may be provided as a double seal on the folding part 130 and have high sealing strength.

The pouch type battery cell 10 may include a venting part 160 disposed between the cup part 110 and the discharge passage 140. The venting part 160 may be formed by sealing a portion of the folding part 130 weaker than the sealing part 150, so that when the internal pressure of the cup part 110 increases, the weaker seal breaks, and the cup part 110 and the discharge passage 140 are placed in communication with each other. Alternatively, the venting part 160 may be unsealed. Thus, in either scenario the cup part 110 may be in selective communication with the discharge passage.

In more detail, the venting part 160 may be provided by slightly sealing the first facing portion 131 and the edge portion 120 of the second case 100B or leaving such region unsealed. That is, a portion of the first sealing part 151 may be unsealed or slightly sealed to be defined as the venting part 160.

The venting part 160 may overlap the second sealing part 152 in the thickness direction of the edge portion 120 of the second case 100B.

When the first facing portion 131 and the edge portion 120 of the second case 100B are weakly sealed to each other to provide the venting part 160, the sealing strength of the venting part 160 may be lower than that of each of the first sealing part 151 and the second sealing part 152.

As illustrated in FIG. 4, when the first facing portion 131 and the edge portion 120 of the second case 100B are unsealed to provide the venting part 160, if the internal pressure of the cup part 110 increases, a space between the first facing portion 131 and the edge portion 120 of the second case 100B may be spread to generate a gap g. Thus, the gas in the cup part 110 may flow into the discharge passage 140 through the gap g.

Alternatively, when the first facing portion 131 and the edge portion 120 of the second case 100B are weakly sealed to provide the venting part 160, if the internal pressure of the cup part 110 increases, a space between the first facing portion 131 and the edge portion 120 of the second case 100B may be spread to break the weak sealing and generate a gap g. Thus, the gas in the cup part 110 may flow into the discharge passage 140 through the gap g.

At least one venting part 160, preferably a plurality of venting parts 160 may be provided along circumferences of the first case 100A and the second case 100B.

At least one venting part 160 may be provided on each folding part 130. For example, when the plurality of folding parts 130 include a first folding part 130A and a second folding part 130B, the plurality of venting parts 160 may include a first venting part 160A disposed along a length side of the edge portion 120 and a second venting part 160B disposed along a width side of the edge portion 120.

When the internal pressure of the cup part 110 increases, the first venting part 160A may allow the discharge passage 140 in the first folding part 130A to communicate with the cup part 110, and the second venting part 160B may allow the discharge passage 140 in the second folding part 130B to communicate with the cup part 110.

However, it is also possible to provide the plurality of venting parts 160 on a single folding part 130.

The pouch type battery cell 10 has an advantage in that it is easy to design an approximate flow rate at which the gas is discharged from the cup part 110 by adjusting the length, the number, the position, and the like of the venting part 160.

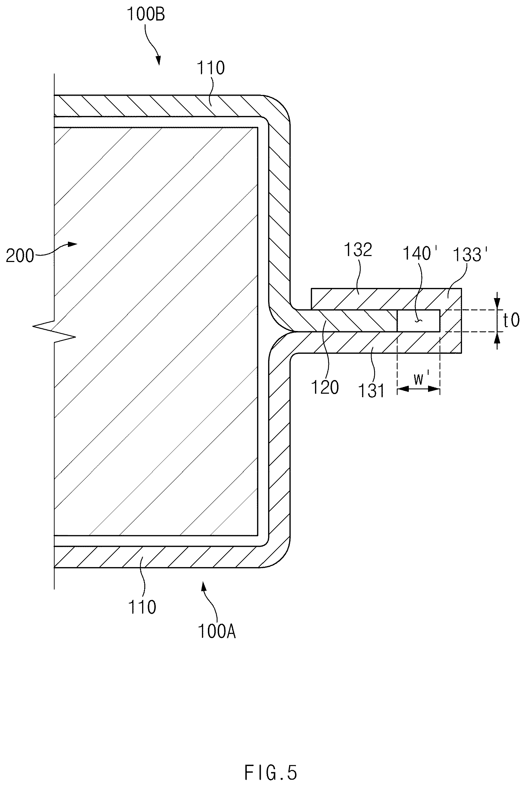

FIG. 5 is a view illustrating a modified example of the connection portion illustrated in FIGS. 3 and 4.

A connection portion 133' according to the modified example may define a discharge passage 140'. A width of the discharge passage 140' in a direction parallel to the thickness of the edge portion 120 of the second case 100B (a vertical direction with reference to FIG. 5) may be equal or similar to a thickness t0 of the edge portion 120 of the second case 100B.

In order to secure a sufficiently wide cross-sectional area of the discharge passage 140', the width of the discharge passage 140' in a direction parallel to the width of the edge portion 120 of the second case 100B (a horizontal direction with reference to FIG. 5) may be greater than a thickness t0 of the edge portion 120 of the second case 100B. Preferably, the width W' of the discharge passage 140' may be twice or more than the thickness t0 of the edge portion 120 of the second case 100B.

The connection portion 133' may define a polygonal discharge channel 140' that does not include a curved surface. However, it is not limited thereto, and, like the first embodiment, it is possible for the connection portion 133' to have a curved surface.

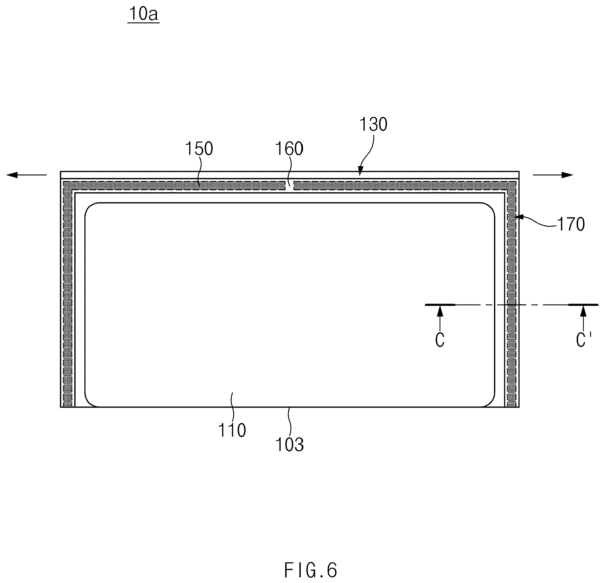

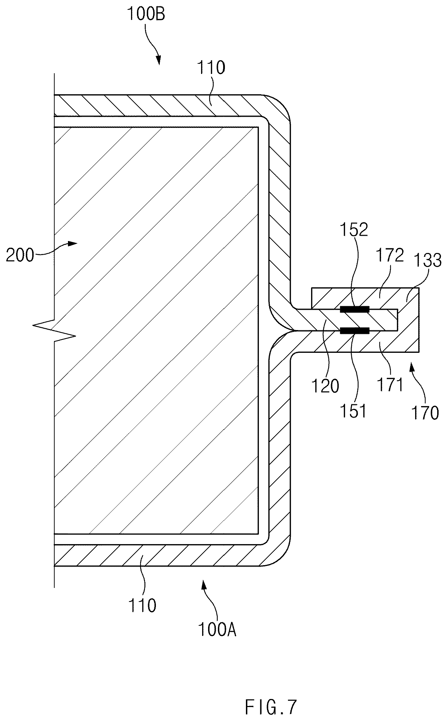

FIG. 6 is a plan view illustrating a pouch type battery cell according to a second embodiment of the present invention, and FIG. 7 is a partial cross-sectional view taken along line C-C' of FIG. 6.

In a pouch type battery cell 10a according to a second embodiment, one or more of the three sides excluding folding region 103 may be provided with a folding part 130, and each of the other sides may be provided with a sub-folding part 170.

The sub-folding part 170 may be provided by folding an edge portion 120 of a first case 100A to surround an edge portion 120 of a second case 100B such that a discharge passage is not formed. That is, the sub-folding part 170 may be folded, curved, or bent at a position adjacent to or in contact with a terminal end of the edge portion 120 of the second case 100B.

Similar to the folding part 130, the sub-folding part 170 may include a first facing portion 171 facing one surface of the edge portion 120 of the second case 100B, a second facing portion 172 facing the other surface of the edge portion 120 of the second case 100B, and a connection portion 173 connecting the first facing portion 171 to the second facing portion 172. The connection portion 173 may be folded, bent, or curved in a state in contact with or adjacent to the terminal end of the edge portion 120 of the second case 100B.

A sealing part 150 may be disposed on the sub-folding part 170. The sealing part 150 may be provided by sealing the first facing portion 171 and the second facing portion 172 with the edge portion 120 of the second case 100B. In more detail, the sealing part 150 may include a first sealing part 151, on which the edge portion 120 of the second case 100B and the first facing portion 171 are sealed, and a second sealing part 152 on which the edge portion 120 of the second case 100B and the second facing portion 172 are sealed. That is, the sealing part 150 may be provided as a double seal on the sub-folding part 170 and higher sealing strength.

The sub-folding part 170 may be compactly provided compared to the folding part 130. Thus, an energy density of the pouch type battery cell 10a may be improved by providing the sub-folding part 170 instead of the folding part 130 at a portion at which the formation of the discharge passage 140 is unnecessary.

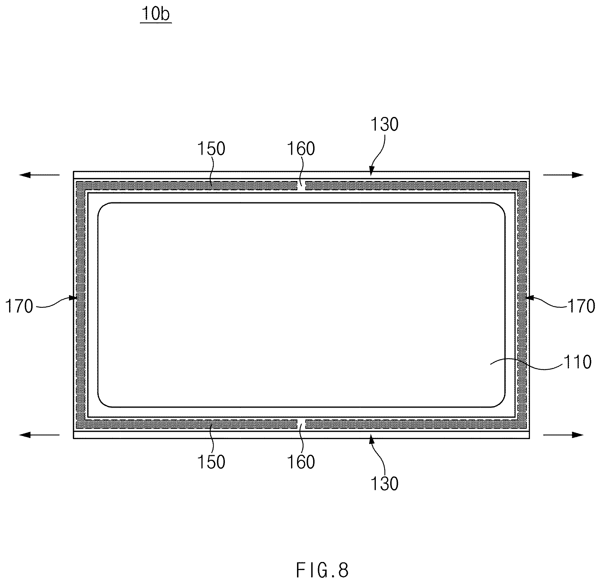

FIG. 8 is a plan view of a pouch type battery cell according to a third embodiment of the present invention.

A pouch type battery cell 10b according to a third embodiment may be manufactured by sealing a first case 100A and a second case 100B, which are not integrally connected, but are provided as separate components. Edge portions 120 of the first case 100A and the second case 100B may contact each other and subsequently be sealed together to define four sides of the pouch type battery cell 10b. Thus, the sealing part 150 may be disposed on the four sides of the pouch type battery cell 10b.

The folding part 130 may be disposed on at least one of the four sides of the pouch type battery cell 10. For example, as illustrated in FIG. 8, the folding parts 130 may be disposed on opposite sides with a cup part 110 therebetween and may be provided in a pair, which are parallel to each other. As another example, the folding part 130 may be disposed on each of the four sides of the pouch type battery cell 10. As described above, at least one venting part 160 may be disposed on each folding part 130.

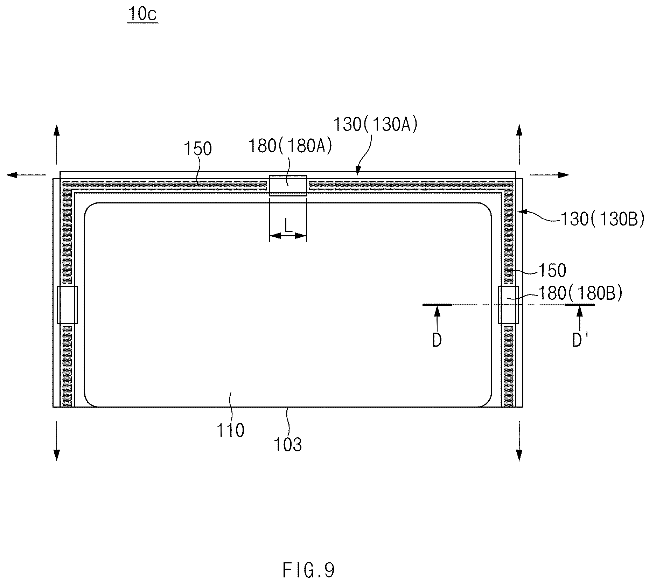

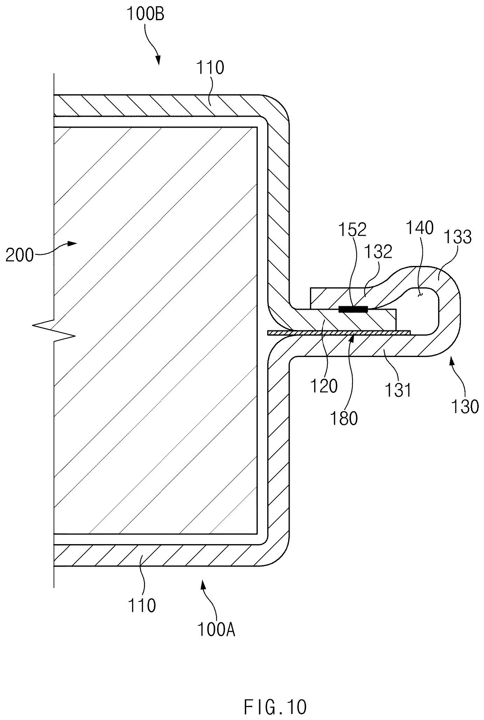

FIG. 9 is a plan view of a pouch type battery cell according to a fourth embodiment of the present invention, and FIG. 10 is a partial cross-sectional view taken along line D-D' of FIG. 9.

Hereinafter, contents duplicated with the foregoing embodiment will be omitted, and differences will be mainly described.

A pouch type battery cell 10c according to a fourth embodiment may include a gas discharge member 180 provided on a folding part 130 and disposed between a cup part 110 and a discharge passage 140. The gas discharge member 180 may replace the venting part 160 of the foregoing first embodiment.

The gas discharge member 180 may be disposed between the cup part 110 and the discharge passage 140. The gas discharge member 180 may be disposed between a first facing portion 131 of the folding part 130 and an edge portion 120 of a second case 100B.

The gas discharge member 180 may overlap a second sealing part 152 in a thickness direction of the edge portion 120 of the second case 100B.

The gas discharge member 180 may be formed of a material that is permeable to a gas. Thus, when an internal pressure of the cup part 110 increases, a gas in the cup part 110 may be discharged to the discharge passage 140 through the gas discharge member 180.

An inner end of the gas discharge member 180 may be disposed within the cup part 110. An outer end of the gas discharge member 180 may be disposed within the discharge passage 140. A width of the gas discharge member 180 may be wider than that of a sealing part 150, particularly a second sealing part 152. Thus, the gas generated in the cup part 110 may be smoothly discharged to the discharge passage 140 through the gas discharge member 180.

Preferably, an outer end of the gas discharge member 180 may protrude further than a terminal end of the edge portion 120 of the second case 100B. Thus, the gas passing through the gas discharge member 180 may be discharged not only in a width direction (horizontal direction in FIG. 10) of the gas discharge member 180 but also in a surface direction (vertical direction in FIG. 10). That is, the gas may be smoothly discharged into the discharge passage 140.

A length L of the gas discharge member 180 may be appropriately adjusted according to a gas discharge amount required by the pouch type battery cell 10c and gas permeability of the gas discharge member 180. The length of the gas discharge member 180 may mean a direction parallel to a length of the sealing part 150.

The gas discharge member 180 may be formed of a material having a melting point higher than that of a first resin layer (e.g., PP layer) forming the innermost layer of the case 100. In addition, the gas discharge member 180 may be formed of a material that does not react with an electrolyte.

For example, the gas discharge member 180 may include a binder including at least one of an olefin-based resin, an acrylic resin, or a fluorine-based resin. For example, the olefin-based resin may be a polypropylene (PP), polyethylene (PE), or polyvinyl-difluoride (PVDF). The fluorine-based resin may be a polytetrafluoroethylene (PTFE) or polyvinylidene fluoride.

As a result of the gas discharge member, the gas may be discharged without a physical opening, and thus, the internal pressure of the cup part 110 may be maintained at the appropriate level, and the pouch type battery cell 10c may be continuously used.

The gas discharge member 180 may further include a hygroscopic material to improve gas permeability while minimizing moisture permeability. That is, the gas discharge member 180 may include a getter material. For example, the hygroscopic material may be calcium oxide (CaO), barium oxide (BaO), lithium chloride (LiCl), silica (SiO₂), calcium (Ca), barium (Ba), etc., but is not limited thereto, and any material that reacts with H₂O may be used.

Since moisture outside the pouch type battery cell 10c is removed by reacting with the hygroscopic material of the gas discharge member 180, penetration of moisture into the inside of the cup part 110 may be prevented.

The gas discharge member 180 may be provided in the form of a film. However, it is not limited thereto, and a resin containing the aforementioned binder and/or hygroscopic material may be applied to at least one of the first facing portion 131 or the edge portion 120 of the second case 100B through any known coating method to provide the gas discharge member 180.

Bonding strength of the gas discharge member 180 to the first facing portion 131 and/or the edge portion 120 of the second case 100B may be less than that of the sealing part 150, particularly the second sealing part 152.

As the internal pressure of the cup part 110 increases, interfaces between the first facing portion 131 and/or the edge portion 120 of the second case 100B and the gas discharge member 180 may be separated from each other little by little. Thus, a gas permeation amount through the gas discharge member 180 may increase.

In addition, when the internal pressure of the cup part 110 is extremely high, the interfaces between the first facing portion 131 and/or the edge portion 120 of the second case 100B and the gas discharge member 180 may be completely separated from each other, thus creating a passage through which the gas is disclosed, similar to the gap g of FIG. 4. As a result, it is possible to quickly discharge the gas, and safety of the pouch type battery cell 10c may be improved.

Referring to FIG. 9, at least one gas discharge member 180, preferably a plurality of gas discharge members 180 may be provided along circumferences of the first case 100A and the second case 100B.

At least one gas discharge member 180 may be provided in each folding part 130. For example, when the plurality of folding parts 130 include a first folding part 130A and a second folding part 130B, the plurality of gas discharge members 180 may include a first gas discharge member 180A disposed along a length side of the edge portion 120 and a second gas discharge member 180B disposed along a width side of the edge portion 120.

When the internal pressure of the cup part 110 increases, the gas passing through the first gas discharge member 180A may be discharged to the discharge passage 140 in the first folding part 130A, and the gas passing through the second gas discharge member 180B may be discharged to the discharge passage 140 in the second folding part 130B.

However, it is also possible to provide a plurality of gas discharge members 180 on a single folding part 130. It is also possible to replace the venting part 160 of the foregoing second and third embodiments with the gas discharge member 180.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being included in the present invention.

### [Description of the Symbols]

| | | | |
|---|---|---|---|
| 10: | Pouch type battery cell | 100: | Case |
| 110: | Cup part | 120: | Edge portion |
| 130: | Folding part | 131: | First facing portion |
| 132: | Second facing portion | 133: | Connection portion |
| 140: | Discharge passage | 150: | Sealing part |
| 151: | First sealing part | 152: | Second sealing part |
| 160: | Venting part member | 180: | Gas discharge |
| 200: | Electrode assembly | | |

## Claims

1. A pouch type battery cell, in which an electrode assembly is accommodated between a first case and a second case, the pouch type battery cell comprising:
a cup part provided in at least one of the first case or the second case and configured to accommodate the electrode assembly;
a folding part in which an edge portion of the first case surrounds an edge portion of the second case so that a discharge passage is provided between the edge portion of the first case and the edge portion of the second case;
a sealing part provided on the folding part; and
a venting part, wherein when an internal pressure within the cup part increases, the cup part and the discharge passage are in communication with each other through the venting part.

2. The pouch type battery cell of claim 1, wherein the sealing part and the venting part are disposed between the cup part and the discharge passage.

3. The pouch type battery cell of claim 1, wherein the folding part comprises:
a first facing portion configured to face one surface of the edge portion of the second case;
a second facing portion configured to face the other surface of the edge portion of the second case on the side opposite to the first facing portion; and
a connection portion configured to connect the first facing portion to the second facing portion, the connection portion being bent or curved to be spaced a predetermined distance from a terminal end of the edge portion of the second case,
wherein the discharge passage is defined at least in part by the connection portion.

4. The pouch type battery cell of claim 3, wherein a thickness of the connection portion in a direction parallel to a thickness of the edge portion of the second case is greater than a sum of a thickness of the first facing portion, the thickness of the edge portion of the second case, and a thickness of the second facing portion.

5. The pouch type battery cell of claim 3, wherein a width of the discharge passage in a direction parallel to a thickness of the edge portion of the second case is greater than that of the edge portion of the second case.

6. The pouch type battery cell of claim 3, wherein the connection portion comprises a curved surface that is convex outward.

7. The pouch type battery cell of claim 3, wherein the sealing part comprises:
a first sealing part by sealing the first facing portion to the edge portion of the second case; and
a second sealing part by sealing the second facing portion to the edge portion of the second case.

8. The pouch type battery cell of claim 3, wherein the venting part is provided by weakly sealing the first facing portion and the edge portion of the second case with each other, or by not sealing the first facing portion and the edge portion of the second case with each other.

9. The pouch type battery cell of claim 1, wherein the discharge passage extends in a full-length or full-width direction of the cup part and has at least one open end.

10. The pouch type battery cell of claim 1, wherein the venting part is provided in plurality along a circumference of the first case and the second case.

11. The pouch type battery cell of claim 1, wherein each of the folding part and the venting part is provided in plurality,
wherein the plurality of folding parts comprise:
a first folding part extending in a full-length direction of the cup part; and
a second folding part extending in a full-width direction of the cup part,
wherein the plurality of venting parts comprise:
a first venting part disposed at the first folding part; and
a second venting part disposed at the second folding part.

12. A pouch type battery cell, in which an electrode assembly is accommodated between a first case and a second case, the pouch type battery cell comprising:
a cup part provided in at least one of the first case or the second case and configured to accommodate the electrode assembly;
a folding part in which an edge portion of the first case surrounds an edge portion of the second case so that a discharge passage is provided between the edge portion of the first case and the edge portion of the second case;
a sealing part provided on the folding part; and
a gas discharge member disposed between the cup part and the discharge passage, the gas discharge member being formed of a gas permeable material.

13. The pouch type battery cell of claim 12, wherein the gas permeable material comprises a hygroscopic material.

14. The pouch type battery cell of claim 12, wherein an inner end of the gas discharge member is provided at least partially disposed within the cup part.

15. The pouch type battery cell of claim 12, wherein an outer end of the gas discharge member is provided at least partially within the discharge passage.

16. The pouch type battery cell of claim 12, wherein an outer end of the gas discharge member protrudes further than an end of the edge portion of the second case.

17. The pouch type battery cell of claim 12, wherein the folding part comprises:
a first facing portion configured to face one surface of the edge portion of the second case;
a second facing portion configured to face the other surface of the edge portion of the second case; and
a connection portion configured to connect the first facing portion to the second facing portion, the connection portion being bent or curved so as to be spaced a predetermined distance from a terminal end of the edge portion of the second case,
wherein the discharge passage is at least partially defined by the connection portion.

18. The pouch type battery cell of claim 17, wherein the gas discharge member is disposed between the first facing portion and the edge portion of the second case.

19. The pouch type battery cell of claim 12, wherein the gas discharge member is provided in plurality along circumferences of the first case and the second case.

20. The pouch type battery cell of claim 1, wherein the folding part includes a sub-folding part,
wherein a connecting portion of the sub-folding part is in contact with or adjacent to a terminal end of the edge portion of the second case.
